# FASCICULE DE BREVET EUROPEEN

(11) **EP 0 401 062 B1**
(45) Date de publication et mention de la délivrance du brevet: **08.06.1994**
(21) Numéro de dépôt: 90401157.4
(22) Date de dépôt: 27.04.1990
(51) Int. Cl.: G02B 27/14, G02B 23/14

(54) **Dispositif d'alignement mutuel polychromatique et appareil de visée en comportant application**
Vorrichtung zur gegenseitigen Ausrichtung von verschieden farbigen Strahlbündeln und Visiereinrichtung, die diese Vorrichtung enthält
Device for the mutual alignment of multicolour lightbeams and optical sight comprising such a device

(30) Priorité: 03.05.1989 FR 8905887
(43) Date de publication de la demande: 05.12.1990
(73) Titulaire: SOCIETE D'APPLICATIONS GENERALES D'ELECTRICITE ET DE MECANIQUE SAGEM, F-75783 Paris Cédex 16 (FR)
(72) Inventeur: Encaoua, Serge, F-92110 Clichy (FR); Metivier, Philippe, F-78300 Poissy (FR)
(74) Mandataire: Fort, Jacques

(56) Documents cités:
- EP-A- 0 251 920
- DE-A- 2 629 820
- FR-A- 2 535 472
- US-A- 4 422 758
- RADIO ENGINEERING AND ELECTRONIC PHYSICS, vol. 18, no. 17, juillet 1973, pages 1097-1100; Y.I. KOLESOV et al.: "A study of beamsplitters for the far IR"

## Description

L'invention concerne les dispositifs d'alignement mutuel polychromatiques suivant le document US-A-4 811 061, conforme au préambule de la revendication 1.

Le dispositif d'alignement décrit à titre d'exemple dans le document US-A-4 811 061 permet d'harmoniser les lignes de visée d'une caméra thermique, d'une caméra à CCD et d'un télémètre laser avec une voie d'observation visuelle oculaire de l'appareil, du fait qu'il génère une référence optique collimatée commune dans le visible, l'infrarouge lointain et le proche infrarouge.

L'invention vise à simplifier le dispositif suivant le document US-A-4 811 061 en permettant de se dispenser d'un trou-source ayant une émission dans le même domaine spectral que la source de lumière parallèle appartenant à l'appareil de visée.

Dans ce but, l'invention propose un dispositif du type ci-dessus défini, suivant la partie caractérisante de la revendication 1.

On voit que le dispositif suivant l'invention substitue une voie de référence en réception à une des voies de référence en émission (par exemple dans le domaine visible) ; dans le cas où l'appareil de visée est du type décrit à titre d'exemple dans le document US-A-4 811 061, le laser du télémètre constitue la source fournissant un faisceau de lumière parallèle.

L'invention sera mieux comprise à la lecture de la description qui suit d'un mode particulier de réalisation, donné à titre d'exemple non limitatif. La description se réfère aux dessins qui l'accompagnent, dans lesquels :
- la Figure 1 est une vue schématique d'un dispositif d'alignement polychromatique, en coupe suivant un plan passant par l'axe des différents faisceaux lumineux, et de ceux des composants d'un appareil de visée associé qui sont nécessaires pour faire apparaitre le fonctionnement du dispositif ;
- la Figure 2 est un schéma montrant une variante de constitution du capteur porté par le dispositif ;
- la Figure 3, similaire à la figure 1, montre une variante du mélangeur optique.

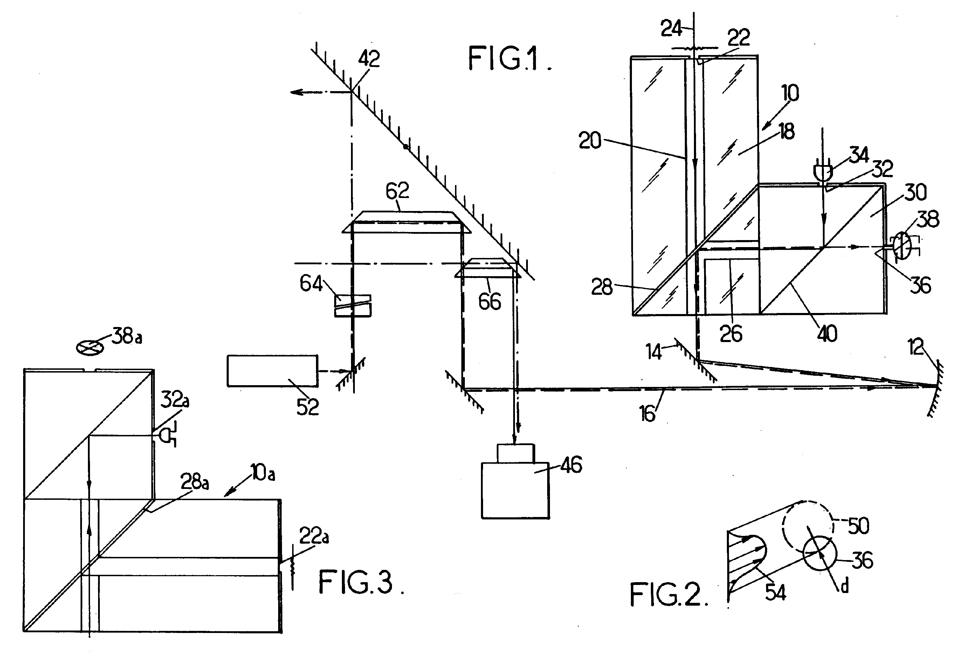

Le dispositif d'alignement montré en Figure 1 est destiné à permettre l'harmonisation entre trois voies et, pour cette raison,
- à fournir un faisceau unique collimaté de sortie présentant une composante spectrale dans deux plages de longueur d'onde, l'une allant de 8 à 12 »m (infrarouge lointain) et l'autre comprenant la lumière visible et l'infrarouge proche ;
- à recevoir un faisceau collimaté cylindrique, monochromatique d'entrée, dans l'infrarouge proche, et à focaliser ce faisceau sur un capteur.

Le dispositif comporte dans ce but un mélangeur optique 10 et un miroir parabolique 12 qui reçoit le faisceau de sortie du mélangeur 10 (et le faisceau d'entrée) ; ce miroir 12 forme, à partir du faisceau divergent qu'il reçoit du mélangeur, un faisceau parallèle collimaté de sortie 16 et forme, à partir du faisceau parallèle collimaté qu'il reçoit de la source de lumière parallèle, un faisceau convergent. Dans le mode de réalisation illustré, un miroir plan de renvoi 14 est interposé entre le mélangeur 10 et le miroir parabolique 12.

Etant donné que la constitution du mélangeur optique 10 est décrite en détail dans le document US-A-4 811 061, auquel on pourra se reporter, seules seront données ici les indications nécessaires à la compréhension de la présente invention.

Le mélangeur optique 10 comporte un premier bloc 18 dans lequel est ménagé un premier passage 20 traversé par la lumière émise par un trou 22 formant source, éclairé en lumière présentant une énergie importante dans l'infrarouge lointain. Cet éclairage peut être assuré par un filament 24 en métal noble, chauffé par passage d'un courant électrique.

Dans le bloc 18 est ménagé un second passage 26, orthogonal au premier, destiné à être traversé par la lumière dans le visible et l'infrarouge proche. Le mélange des flux lumineux est assuré par une lame mince 28, transparente dans la plage allant de 8 à 12 »m et réfléchissante dans l'infrarouge proche et le visible.

Le mélangeur 10 comprend un second bloc 30 destiné :
- à envoyer dans le passage 26 un faisceau contenant la lumière visible et proche infrarouge provenant d'une source 32, constituée par exemple par un trou illuminé par une diode électroluminescente 34 émettant dans le visible et le proche infrarouge,
- à recevoir, par le passage 26, un faisceau contenant la lumière provenant d'une source de lumière parallèle contenue dans l'appareil de visée et à le focaliser sur un capteur 38 à travers un trou 36 formant diaphragme.

Le second bloc 30 peut être massif, car il existe de nombreux matériaux optiques ayant une transparence suffisante dans le visible et l'infrarouge proche. On peut notamment utiliser le quartz. Le mélange des flux émis par le trou source 32 et reçu par le détecteur 38 est assuré par une lame dichroïque 40, réfléchissante pour l'émission de la diode 34 et transparente pour la lumière provenant de la source de l'appareil de visée, ou semi-réfléchissante.

Les blocs 18 et 30 ont des dimensions telles que les trajets optiques depuis chacun des trous jusqu'au miroir parabolique 16 soient égaux à la distance focale de ce miroir.

L'appareil de visée comprend un miroir de pointage et de stabilisation 42, tournant autour d'un axe et commun à plusieurs voies optiques travaillant dans des plages de longueur d'onde différentes. Le dispositif comporte de plus des moyens permettant, en vue de l'harmonisation des différentes voies entre elles, de fractionner le faisceau parallèle 16 entre plusieurs voies de réception et une voie d'émission. La Figure 1 montre une seule voie de réception, comportant une caméra thermique 46, sensible par exemple dans la plage allant de 8 à 12 »m et une voie d'émission-réception constituée par un télémètre laser comportant un laser à impulsions 52 et un récepteur (non représenté).

La caméra thermique 46 est généralement associée à une électronique qui permet de déterminer la position d'une tache formée à partir de la source 22 et d'incruster, sur l'écran de visualisation de l'image formée par la caméra, un réticule définissant la ligne de visée thermique. Un élément optique est prévu pour substituer l'image de la source 42 à celle de la scène vue par la caméra. Sur la Figure 1, cet élément est schématisé par un invariant escamotable 66 représenté dans la position où il forme l'image de la source 22 sur la caméra.

Le laser 52 constitue une source fournissant de fa on répétitive des impulsions courtes de lumière monochromatique (par exemple à 1,06 ou à 1,54 »m) sous forme d'un faisceau sensiblement parallèle, ayant, dans un exemple représentatif, une divergence ne dépassant pas 0,4 mrad ; il permet d'illuminer le capteur 38 à travers un élément d'ajustement de la position du faisceau, représenté sous forme d'un diasporamètre 64, et un invariant 62 lorsque ce dernier est dans la position montrée sur la Figure 1.

Le capteur 38 doit permettre de déterminer la direction de l'écart angulaire entre le faisceau du laser entrant dans le dispositif et l'axe de référence défini par le centre du capteur. Dans le cas illustré sur la Figure 1, le capteur 38 est constitué par une cellule à quatre quadrants.

A partir de la différence entre les signaux fournis par les quadrants deux à deux opposés, il est possible de déterminer le sens de l'écart et de le corriger à l'aide du diasporamètre 64.

Dans la variante de réalisation montrée en Figure 2, le capteur est d'un type capable simplement de mesurer l'énergie reçue à travers le trou 36. Ce capteur peut notamment être une photodiode de dimensions suffisantes pour collecter la totalité de l'énergie lumineuse traversant le trou 36. Souvent, l'optique du dispositif est telle que la tache 50 du faisceau laser ait un diamètre d'environ 100 »m. La répartition d'énergie dans le faisceau est en général à symétrie circulaire et du genre montré, en section droite, par la courbe montrée en 54 sur la Figure 2. A condition que le trou 36 ait un diamètre inférieur à celui de la tache, la puissance lumineuse reçue par le détecteur est dans ce cas une fonction décroissante de l'écart d. Le faisceau du laser 52 entrant dans le dispositif 10 est sur l'axe de référence lorsque la puissance mesurée à la sortie du capteur sera maximale. La recherche de maximum peut s'effectuer soit de façon automatique, soit par commande manuelle du diasporamètre 64.

La mise en oeuvre du dispositif s'effectue, sauf en ce qui concerne le télémètre laser, comme dans le cas du document US-A-4 811 061. Une fois la ligne de visée de la voie d'observation visuelle alignée avec l'axe de référence matérialisé par la source 32, à l'aide du miroir d'ajustage 46, on peut harmoniser le laser 52 en amenant l'invariant 62 dans la position montrée en Figure 1 (l'invariant 66 étant escamoté). L'harmonisation s'effectue par action sur le diasporamètre 64.

La variante de réalisation montrée en figure 3 se différentie de celle de la Figure 1 en ce que la lame 28a travaille en réflexion pour l'infrarouge lointain fournie par la source 22a tandis qu'elle travaille en transmission pour le visible et l'infrarouge proche (rayonnement émis par la source 34a et rayonnement reçu par le capteur 38a), dont les positions peuvent être interverties. Cette disposition facilite le réglage du dispositif, car on peut régler le trou source 22a dans le visible sans se heurter à des problèmes de changement d'indice suivant la longueur d'onde ou des difficultés de trouver de matériaux uniquement transparents dans l'infrarouge. La lame 28a peut être rendue dichroïque par les mêmes procédés de dépot que dans le cas de la Figure 1, avec des épaisseurs de couches différentes.

## Revendications

1. Dispositif d'harmonisation d'un appareil de visée par alignement mutuel polychromatique entre des récepteurs de lumière (46) et une source (52), fournissant un faisceau de lumière parallèle, de l'appareil, comprenant :
un mélangeur optique (10 ; 10a) comportant deux trous-sources (22, 32 ; 22a, 32a) éclairés chacun par une émission dans l'un des domaines spectraux pour lesquels l'alignement doit être réalisé et une lame (28 ; 28a) combinant les émissions suivant un faisceau commun (16) de sortie du mélangeur ; et
un miroir parabolique (12) placé de façon à recevoir le faisceau commun obliquement par rapport à son axe, le mélangeur et le miroir étant constitués de façon que lesdits trous-sources soient au foyer du miroir ou au point conjugué du foyer par rapport à la lame,
caractérisé en ce que le mélangeur (10) comporte également un capteur (38 ; 38a) sensible dans le domaine d'émission de la source de lumière parallèle, placé au foyer ou en un point conjugué optiquement du foyer du miroir, de façon que le faisceau de la source de lumière parallèle se focalise sur ledit capteur lorsque ce faisceau est coaxial audit faisceau commun réfléchi par le miroir.

2. Dispositif selon la revendication 1, caractérisé en ce que le capteur est constitué par une cellule à quatre quadrants (38 ; 38a).

3. Dispositif selon la revendication 1, caractérisé en ce que le capteur est constitué par un organe détecteur placé derrière un trou (36) de diamètre inférieur à celui de la tache focale (50) de ladite source.

4. Dispositif selon l'une quelconque des revendications précédentes, caractérisé en ce que ladite source (52) est constituée par le laser émetteur d'un télémétre à laser.

5. Dispositif selon l'une quelconque des revendications précédentes, caractérisé en ce que ladite lame (28a) est disposée de façon à travailler en réflexion dans l'infrarouge lointain et en transmission dans l'infrarouge proche et le visible.

6. Appareil de visée comprenant un dispositif (10, 12) selon l'une quelconque des revendications précédentes, un télémètre laser dont le laser émetteur constitue ladite source de lumière parallèle (52) dudit dispositif, et une caméra (46) fonctionnant dans une plage de longueur d'onde différente de celle du laser, caractérisé en ce qu'il comprend des moyens tels qu'un diasporamètre (64) permettant d'ajuster le faisceau de lumière parallèle entrant dans ledit dispositif en coïncidence avec un axe de référence dans ce dernier, ledit axe étant matérialisé par ledit capteur dudit dispositif.

## Patentansprüche

1. Vorrichtung zur Harmonisierung einer Visiereinrichtung durch gegenseitige Ausrichtung von mehrfarbigen Strahlenbündeln zwischen Lichtempfängern (46) und einer ein Bündel parallelen Lichtes liefernden Quelle (52) der Einrichtung, wobei die Vorrichtung eine optische Mischeinrichtung (10,10a), welche zwei Lochquellen (22,32,22a,32a), welche jeweils durch eine Emission in einer der Spektralbereiche, für die die Ausrichtung verwirklicht werden soll, beleuchtet wird, und eine Platte (28,28a) aufweist, welche die Emissionen nach einem gemeinsamen Bündel (16) vom Ausgang der Mischeinrichtung kombiniert, und einen Parabolspiegel (12) aufweist, der derart angeordnet ist, daß er das gemeinsame Bündel schräg im Verhältnis zu seiner Achse empfängt, wobei die Mischeinrichtung und der Spiegel derart angeordnet sind, daß die drei Quellen im Brennpunkt des Spiegels oder im konjugierten Punkt des Brennpunktes im Verhältnis zur Platte sind,
dadurch gekennzeichnet,
daß die Mischeinrichtung (10) außerdem einen im Emissionsbereich der parallelen Lichtquelle sensiblen Sensor (38,38a) aufweist, der im Brennpunkt oder in einem optisch konjugierten Punkt des Brennpunktes des Spiegels angeordnet ist, derart, daß das Bündel der parallelen Lichtquelle sich auf dem Sensor focussiert, wenn dieses Bündel koaxial mit dem gemeinsamen, durch den Spiegel reflektierten Bündel ist.

2. Vorrichtung nach Anspruch 1,
dadurch gekennzeichnet,
daß der Sensor von einer Zelle mit vier Quadranten (38,38a) gebildet ist.

3. Vorrichtung nach Anspruch 1,
dadurch gekennzeichnet,
daß der Sensor von einem Detektororgan gebildet ist, welches hinter einem Loch (36) mit einem geringeren Durchmesser als demjenigen des Brennpunktes (50) der Quelle angeordnet ist.

4. Vorrichtung nach irgendeinem der vorangehenden Ansprüche,
dadurch gekennzeichnet,
daß die Quelle (52) von dem Lasersender eines Telemeter-Lasers gebildet ist.

5. Vorrichtung nach irgendeinem der vorangehenden Ansprüche,
dadurch gekennzeichnet,
daß die Platte (28a) derart angeordnet ist, daß sie in Reflektion in fernem Infrarot und in Übertragung in nahem und sichtbarem Infrarot arbeitet.

6. Visiereinrichtung mit einer Vorrichtung (16,12) nach irgendeinem der vorangehenden Ansprüche, einem Telemeter-Laser, dessen Lasersender die parallele Lichtquelle (52) der Vorrichtung bildet und einer Kamera (46), welche in einem von demjenigen des Lasers unterschiedlichen Wellenlängenbereich funktioniert,
dadurch gekennzeichnet,
daß sie Mittel, wie ein Diasporameter (64) aufweist, welche es erlauben, das Bündel parallelen Lichtes, das in die Vorrichtung eintritt, mit der Bezugsachse in der letzten auszurichten, wobei diese Achse durch den Sensor der Vorrichtung materialisiert ist.

## Claims

1. A device for harmonization of an aiming apparatus by polychromatic mutual alignment of light receivers (46) and a source (52), delivering a parallel light beam, of the apparatus, comprising:
an optical mixer (10, 10a) having two source-forming holes (22, 32; 22a, 32a) each lightened by an emission in one of the spectral ranges for which alignment should be achieved and a plate (22, 22a) for combining the emissions into a common mixer output beam (16); and
a parabolic mirror (12) located to receive the common beam at an angle with respect to the axis thereof, the mixer and the mirror being constructed for said source-forming holes to be at the focus of the mirror or at a point conjugated with the focus with respect to the plate,
characterized in that the mixer (10) further comprises a sensor (38; 38a) responsive to the emission range of the parallel light source, fitted at the focus or at a point optically conjugated with the focus of the mirror, for the beam of the parallel light source to be focused on said sensor when the beam is coaxial to said common beam as reflected by the mirror.

2. Device according to claim 1,
characterized in that the sensor is a four-quadrant cell (38; 38a).

3. Device according to claim 1,
characterized in that the sensor consists of a sensing element located behind a hole (36) having a diameter smaller than a focal spot (50) of said source.

4. Device according to any one of the preceding claims, characterized in that said source (52) consists of a light-delivering laser of a laser range finder.

5. Device according to any one of the preceding claims,
characterized in that said plate (28a) is located to reflect far infrared and to transmit near infrared light and visible light.

6. An aiming apparatus comprising a device (10, 12) according to any one of the preceding claims, a laser range finder whose emitting laser constitutes said source of parallel light (52) of said device and a camera (46) operating in a wavelength range different from that of said laser,
characterized in that it comprises means, such as a diasporameter (64), for adjusting a parallel light beam which enters said device in coincidence with a reference axis in the latter, said axis being represented by said sensor of said device.
